## Europäisches Patentamt

## European Patent Office

## Office européen des brevets

(19)

(11) Veröffentlichungsnummer: **0 012 171**
**B1**

(12) **EUROPÄISCHE PATENTSCHRIFT**

(45) Veröffentlichungstag der Patentschrift:
**29.12.82**

(21) Anmeldenummer: **79103916.7**

(22) Anmeldetag: **11.10.79**

(51) Int. Cl.³: **G 05 B 19/02**

(54) **Programmierbares Schaltwerk.**

(30) Priorität: **26.10.78 DE 2846686**

(43) Veröffentlichungstag der Anmeldung:
**25.06.80 Patentblatt 80/13**

(45) Bekanntmachung des Hinweises auf die Patenterteilung:
**29.12.82 Patentblatt 82/52**

(84) Benannte Vertragsstaaten:
**GB IT NL SE**

(56) Entgegenhaltungen:
**CH-A-512 110**
**DE-A-2 659 662**
**DE-B-2 657 404**
**SIEMENS-ZEITSCHRIFT 50, 1976, Beiheft,**
**»Fernschreiber 1000«, A. BACHNER et al. »An-**
**schlußtechnik des Fernschreibers 1000«, Seiten 30**
**bis 33**

(73) Patentinhaber: **SIEMENS AKTIENGESELLSCHAFT**
**Berlin und München, Postfach 22 02 61,**
**D-8000 München 22 (DE)**

(72) Erfinder: **Fiedler, Helmut, Dipl.-Ing.,**
**Eichbaumstrasse 33, D-8011 Siegertsbrunn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Programmierbares Schaltwerk

Die Erfindung bezieht sich auf ein programmierbares Schaltwerk zum Steuern des zeitlichen Ablaufs von Funktionen in Geräten, an dessen Eingängen eine Durchführung der Funktionen auslösende Eingangssignale anliegen und das unter Verwendung eines mit mindestens einer programmierbaren Matrix versehenen Schaltnetzes und eines mit diesem verbundenen Zustandsregisters zu durch mindestens einen Zeitgeber festgelegten Zeitpunkten einzelnen Schritten der durchzuführenden Funktionen zugeordnete Ausgangssignale abgibt.

In Geräten der Nachrichtentechnik und elektronischen Datenverarbeitung sind Schaltwerke vorgesehen, die den zeitlichen Ablauf von Funktionen in den Geräten steuern. Diese Schaltwerke sind üblicherweise aus einer Mehrzahl von binären Verknüpfungsgliedern und Speichergliedern aufgebaut. Diese Verknüpfungsglieder und Speicherglieder werden vom Entwickler eines derartigen Schaltwerks zusammengefügt. Die Art und die Anzahl der Verknüpfungsglieder und Speicherglieder, sowie deren Zuordnung in dem Schaltwerk bei vorgegebenen auszuführenden Funktionen werden nach dem Ermessen des Entwicklers festgelegt. Die internen logischen Funktionen des Schaltwerks werden erst in diesem Arbeitsgang vollständig definiert und in Form eines Logikplans dokumentiert. Dieses Vorgehen hat zur Folge, daß die Struktur des Schaltwerks besonders bei unregelmäßigen Netzwerken, uneinheitlich und topographisch oft sehr kompliziert ist. Damit wird die Darstellung unübersichtlich, und Funktionsänderungen sind nur sehr schwer durchführbar. Weiterhin muß die Beschreibung des Schaltwerks auf der Ebene der Verknüpfungs- und Speicherglieder erfolgen, da nur auf dieser Ebene die logischen Funktionen vollständig definiert sind.

Aus der DE-AS 2 657 404 ist ein Schaltwerk bekannt, bei dem die Struktur der Verknüpfungs- und Speicherglieder vordefiniert ist, so daß ein Ablaufdiagramm, das eine beliebige Funktion darstellt, eindeutig abbildbar ist. Dieses Schaltwerk enthält eine Mehrzahl von Steuereinheiten, die jeweils mit einer speichernden Eingangsstufe versehen sind und die unter Verwendung von Matrizen Steuersignale erzeugen, die einerseits die Ausgangssignale darstellen und andererseits zusammen mit den Eingangssignalen den Eingangsstufen zugeführt werden. Bei diesem bekannten Schaltwerk sind die Steuereinheiten entweder hierarchisch oder parallel angeordnet. Jede Steuereinheit steuert die Ausführung mindestens einer Funktion.

Aus einer Veröffentlichung »Anschlußtechnik des Fernschreibers 1000«, Siemens-Zeitschrift 50 (1976), Beiheft »Fernschreiber 1000«, Seiten 30 bis 33, ist ein programmierbares Schaltwerk bekannt, das ein aus zwei programmierbaren Matrizen, einer Hauptmatrix und einer Ausgangsmatrix gebildetes Schaltnetz enthält, dem die Eingangssignale zugeführt werden. Die Ausgangsmatrix erzeugt die Ausgangssignale, während die Hauptmatrix mit einem Zustandsregister und einem Zeitgeber verbunden ist. In dem Zustandsregister werden zu durch den Zeitgeber festgelegten Zeitpunkten Betriebszustände gespeichert. Die Betriebszustände werden in Abhängigkeit von den Eingangssignalen und vorhergehenden Betriebszuständen in der Hauptmatrix ermittelt, während die Ausgangsmatrix in Abhängigkeit von den Eingangssignalen und den vorhergehenden Betriebszuständen die Ausgangssignale erzeugt.

Bei beiden bekannten Schaltwerken werden die Eingangssignale dem Schaltnetz bzw. den Matrizen unmittelbar zugeführt, so daß für jedes Eingangssignal eine Spalte in der entsprechenden Matrix vorgesehen ist. Die bekannten Schaltwerke erfordern daher verhältnismäßig aufwendige Matrizen, bei denen die in den Eingangssignalen enthaltene Redundanz nicht berücksichtigt wird.

Der Erfindung liegt daher die Aufgabe zugrunde, ein programmierbares Schaltwerk anzugeben, bei dem das Schaltnetz bzw. die Matrizen einen geringen Aufwand erfordern.

Erfindungsgemäß wird die Aufgabe bei dem Schaltwerk der eingangs genannten Art gelöst durch mindestens eine Eingangsmatrix, die in Abhängigkeit von den Eingangssignalen und in Abhängigkeit von unterschiedlichen Prioritätsstufen zugeordneten Prioritätssignalen dem Schaltnetz zugeführte Steuersignale erzeugt und durch eine mit einem Prioritätsgenerator versehene Ablaufsteuerung, die die Prioritätssignale erzeugt und an die Eingangsmatrix und an das Schaltnetz abgibt.

Durch die Verwendung der Eingangsmatrix wird die Anzahl der Eingangssignale reduziert. Es wird dabei davon ausgegangen, daß nicht alle möglichen Kombinationen der Eingangssignale relevant sind. Die Eingangsmatrix wirkt einerseits als logisches Verknüpfungsglied und andererseits als zeitlicher Multiplexer. Ein Steuersignal an seinem Ausgang kann in jeder Prioritätsstufe einem anderen Eingangssignal oder Verknüpfungsergebnis zugeordnet sein. Das Multiplexen der Eingangssignale bzw. der Verknüpfungsergebnisse erfolgt durch die Prioritätssignale. In entsprechender Weise erfolgt unter Verwendung der Prioritätssignale das Demultiplexen in dem Schaltnetz.

Das Schaltwerk gemäß der Erfindung hat den Vorteil, daß es kostengünstig hergestellt werden kann. Es eignet sich für den Aufbau als integrierter Schaltkreis, insbesondere als MOS-Schaltkreis. Das Schaltwerk kann auf einfache Weise programmiert werden, und es ist vielseitig einsetzbar. Es eignet sich beispielsweise als Zubringer für einen Mikroprozessor, wenn kritische Realzeitabläufe eine Signalbehandlung mit hoher Abtastrate erfordern.

Um einen vielseitigen Einsatz des programmierbaren Schaltwerks zu erreichen, ist es vorteilhaft, wenn mindestens ein Teil der von dem Schaltnetz erzeugten Ausgangssignale als Rücksignale an der Eingangsmatrix anliegen.

Falls bei dem programmierbaren Schaltwerk das Schaltnetz eine mit dem Zustandsregister und den Zeitgebern verbundene Hauptmatrix und eine mit dem Zustandsregister und den Eingängen des Schaltwerks verbundene, die Ausgangssignale erzeugende Ausgangsmatrix enthält, ist es vorteilhaft, wenn die Steuersignale und die Prioritätssignale an der Hauptmatrix anliegen.

Falls eine Mehrzahl von Zeitgebern vorgesehen ist, ist es zweckmäßig, daß jedem der Zeitgeber eines der Prioritätssignale zugeführt wird. Die Programmierung des Schaltwerks wird dadurch stark vereinfacht, da in jeder Prioritätsstufe dann nur jeweils ein Zeitgeber aktiviert ist.

Für eine vielseitige Anwendung des programmierbaren Schaltwerks ist es zweckmäßig, wenn der Prioritätsgenerator eine programmierbare Matrix enthält, mit der die Anzahl der Prioritätsstufen und deren Reihenfolge festlegbar ist. Es ist auch zweckmäßig, wenn der Prioritätsgenerator durch ein Sperrsignal beeinflußbar ist.

Für einen vielseitigen Einsatz des programmierbaren Schaltwerks ist es weiterhin zweckmäßig, wenn die Eingangsmatrix als programmierbare Matrix ausgebildet ist. Hierbei ist es besonders günstig, wenn die Eingangsmatrix als Durchschaltmatrix ausgebildet ist, mittels der mindestens ein Teil der den Zeilen zugeführten Eingangssignale in Abhängigkeit von den Prioritätssignalen und/oder den Rücksignalen als Steuersignale durchschaltbar ist.

Eine Unabhängigkeit von der Polarität der Eingangssignale und eine Erhöhung der Verknüpfungsmöglichkeiten wird dadurch erreicht, daß mindestens einem Teil der Zeilen der Eingangsmatrix, der Hauptmatrix und/oder der Ausgangsmatrix die Signale wahlweise invertiert oder nichtinvertiert zuführbar sind.

Um die Anzahl der Verbindungen zwischen der Ausgangsmatrix und der Eingangsmatrix möglichst gering zu halten, ist es günstig, wenn die Rücksignale zur Eingangsmatrix codiert übertragen werden und die Eingangsmatrix die Rücksignale decodiert.

Im folgenden wird ein Ausführungsbeispiel des programmierbaren Schaltwerks anhand von Zeichnungen näher erläutert. Es zeigt

Fig. 1 ein Blockschaltbild eines programmierbaren Schaltwerks,

Fig. 2 ein Schaltbild einer Eingangsmatrix,

Fig. 3 ein Schaltbild eines in einer Ablaufsteuerung vorgesehenen Prioritätsgenerators,

Fig. 4 ein Flußdiagramm von durch das Schaltwerk auszuführenden Funktionen,

Fig. 5 ein Schaltbild des programmierbaren Schaltwerks, das für eine Durchführung der in Fig. 4 dargestellten Funktionen programmiert ist.

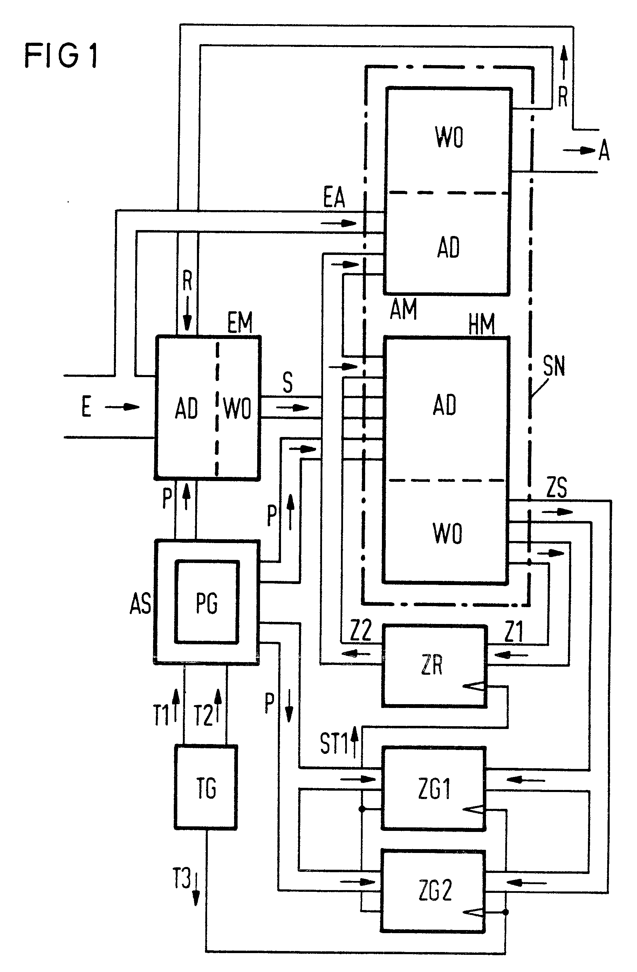

Das in Fig. 1 dargestellte programmierbare Schaltwerk eignet sich für die Realisierung digitaler Steuerungen, insbesondere dann, wenn bei einer Vielzahl von Eingangs- und Ausgangssignalen nur relativ wenig gespeicherte Zustände für die Kombination dieser Signale nötig sind und wenn mehrere Zeiten mit einem großen Variationsbereich zu bilden sind. Das Schaltwerk hat beispielsweise 17 Eingänge, an denen Eingangssignale E anliegen und 16 Ausgänge, an denen Ausgangssignale A abgegeben werden. Das Schaltwerk enthält ein Zustandsregister ZR, in dem bis zu 64 Betriebszustände speicherbar sind sowie zwei voneinander unabhängige Zeitgeber ZG1 und ZG2. Das Programm des Schaltwerks wird einerseits in einem Schaltnetz SN und andererseits in einer Eingangsmatrix EM gespeichert. Das Schaltnetz SN ist beispielsweise aus einer Hauptmatrix HM und einer Ausgangsmatrix AM aufgebaut. Sowohl die Hauptmatrix HM als auch die Ausgangsmatrix AM und die Eingangsmatrix EM sind mit programmierbaren Adreß- und Wortteilen AD bzw. WO versehen.

Die Verknüpfungen der in dem Zustandsregister ZR gespeicherten Betriebszustände mit den Eingangssignalen E werden im Zeitmultiplexverfahren durchgeführt und können auf mehrere Prioritätsebenen aufgeteilt werden. Die Prioritätsebenen werden durch in einer Ablaufsteuerung AS erzeugte Prioritätssignale P festgelegt. Die Ablaufsteuerung AS enthält zu diesem Zweck einen Prioritätsgenerator PG, der beispielsweise ebenfalls als programmierbare Matrix ausgebildet ist. Ein Taktgeber TG erzeugt gegenphasige Taktimpulse T1 und T2 und Taktimpulse T3 zum Fortschalten der Zeitgeber ZG1 und ZG2.

Um das Erzeugen oder Bewerten von Zeitabläufen zu ermöglichen, sind in dem Schaltwerk die Zeitgeber ZG1 und ZG2 vorgesehen. Damit werden im Zustandsregister ZR nur mehr diejenigen Betriebszustände gespeichert, die für die logische — aber nicht zeitliche — Zuordnung der Eingangssignale E zu den Ausgangssignalen A nötig sind. Das Zustandsregister ZR enthält beispielsweise sechs Flipflops, in denen die Betriebszustände in dual codierter Form gespeichert werden. Der jeweils neue Betriebszustand wird durch von dem Schaltnetz SN abgegebene Zustandssignale Z1 dargestellt und durch von den Zeitgebern ZG1 oder ZG2 abgegebene Signale ST1 in das Zustandsregister ZR eingespeichert. Der jeweils aktuelle Betriebszustand wird durch vom Zustandsregister ZR abgegebene Zustandssignale Z2 dargestellt, die dem Schaltnetz SN zugeführt werden.

Das Schaltnetz SN bildet aus den Zustandssignalen Z2 und den an ihren übrigen Eingängen anliegenden Signalen die Ausgangssignale A, die Rücksignale R, die dem neuen Betriebszustand zugeordneten Zustandssignale Z1 und Zeitsignale ZS, die die Zeitanforderungen für die Zeitengeber ZG1 und ZG2 festlegen.

Die beiden Zeitgeber ZG1 und ZG2 sind gleich aufgebaut. Ihre Speicher sind binäre Teilerketten.

Beim Anliegen einer Zeitanforderung durch die Zeitsignale ZS werden die Taktimpulse T3 gezählt, und der Zählerstand wird mit der Zeitanforderung verglichen. Stimmt die Zeitanforderung mit dem Zählerstand überein, so wird das Signal ST1 abgegeben, das angibt, daß die angeforderte Zeit abgelaufen ist. Mit dem Signal ST1 wird dann der neue Betriebszustand in das Zustandsregister ZR eingespeichert.

Die Hauptmatrix HM, die Ausgangsmatrix AM und die Eingangsmatrix EM sind als an sich bekannte PLAs (programable logic arrays) ausgebildet. Bei derartigen Matrizen wird eine ODER-Verknüpfung von UND-Verknüpfungen durchgeführt, und jede in Binärform dargestellte Entscheidungstabelle läßt sich mit ihr realisieren, wenn sie in Anzahl der Eingänge, Zeilen und Ausgänge an die Entscheidungstabelle angepaßt ist. Man nennt den ersten Teil der Matrix, in dem die UND-Verknüpfungen der Eingangssignale durchgeführt werden, den Adreßteil AD der Matrix und den zweiten Teil, in dem die ODER-Verknüpfungen der UND-Verknüpfungen gebildet werden, den Wortteil WO der Matrix.

Die Aufteilung des Schaltnetzes SN in die Hauptmatrix HM und die Ausgangsmatrix AM ermöglicht eine günstige Ausnutzung der Matrizen durch Mehrfachadressierungen und zusammengesetzte Wortbildung. Dem Adreßteil AD der Ausgangsmatrix AM werden Eingangssignale EA, die einen Teil der Eingangssignale E darstellen und die Zustandssignale Z2 zugeführt. Der Wortteil WO der Ausgangsmatrix AM erzeugt die Ausgangssignale A und Rücksignale R, die einen Teil der Ausgangssignale A darstellen können. Die Rücksignale R werden der Eingangsmatrix EM zugeführt. Dem Adreßteil AD der Hauptmatrix HM werden die Zustandssignale Z2, von der Eingangsmatrix EM abgegebene Steuersignale S und die Prioritätssignale P zugeführt. Der Wortteil WO der Hauptmatrix HM erzeugt die Zustandssignale Z1 und die Zeitsignale ZS.

Das Schaltwerk verknüpft die Betriebszustände mit den Eingangssignalen E im Zeitmultiplexverfahren. Dies hat den Vorteil, daß der Aufwand im Wortteil der Hauptmatrix HM durch alternierendes Zuordnen der Zeitgeber ZG1 und ZG2 zu den Abfragezeitpunkten in der Hauptmatrix HM verringert wird. Weiterhin wird der Aufwand im Adreßteil der Hauptmatrix HM durch Abbilden der Eingangssignale E auf die Steuersignale S verringert. Die Eingangsmatrix EM wirkt als Konzentrator und beseitigt die in den Eingangssignalen E vorhandene Redundanz. Es wird dabei davon ausgegangen, daß nicht alle möglichen Kombinationen der Eingangssignale E sinnvoll sind oder benötigt werden. Je nach dem Abfragezeitpunkt im Zeitmultiplexsystem entsprechen die Steuersignale S einer anderen Eingangssituation. Im einfachsten Fall stellt ein Steuersignal S nacheinander jeweils ein anderes Eingangssignal E dar. Die Verarbeitungsbereiche im Zeitmultiplexsystem werden durch die Prioritätssignale P festgelegt, die die einzelnen Verarbeitungszeitpunkte festlegen und die Eingangsmatrix EM, die Hauptmatrix HM und die Zeitgeber ZG1 und ZG2 synchronisieren. Die Abbildungsfunktion der Eingangsmatrix EM kann auch durch die Betriebszustände beeinflußt werden. Diese Funktion übernimmt die Rückkopplung von der Ausgangsmatrix AM zur Eingangsmatrix EM durch die Rücksignale R. Die Rücksignale R werden beispielsweise in einem drei Bit breiten Datenkanal codiert als »interne Eingangssignale« erzeugt und in der Eingangsmatrix EM decodiert.

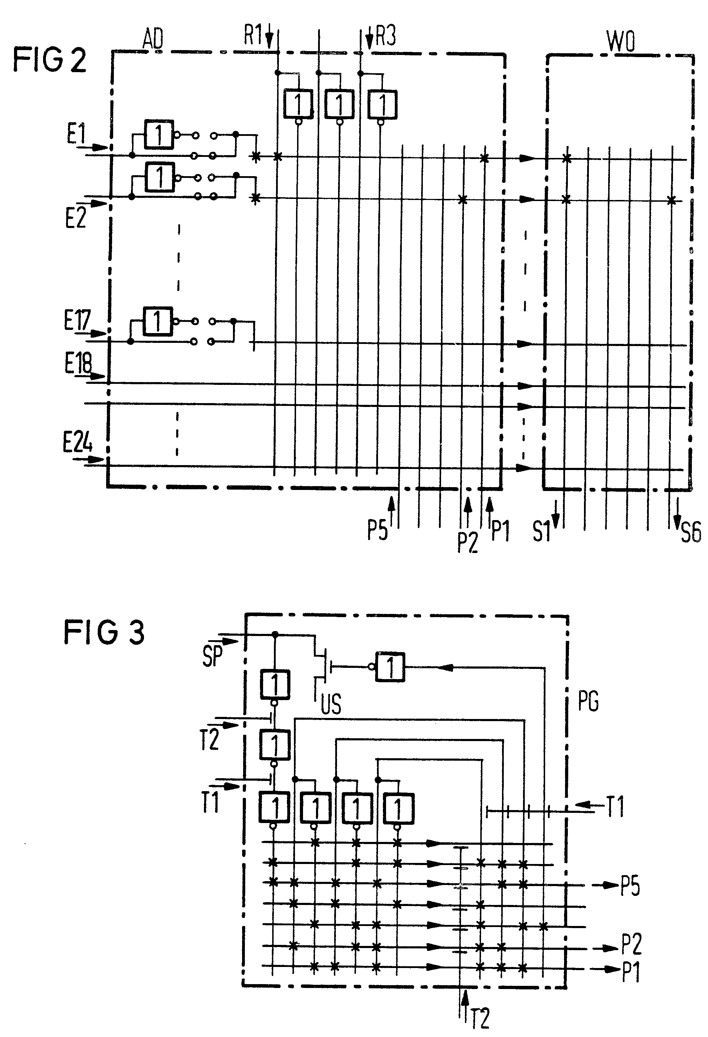

Die in Fig. 2 dargestellte Eingangsmatrix EM ordnet den Eingangssignalen E in Abhängigkeit von den Rücksignalen R und den Prioritätssignalen P die Steuersignale S zu. Die Eingangsmatrix EM ist beispielsweise für 17 Eingangssignale E1 bis E17 und sechs Steuersignale S1 bis S6 ausgelegt. Die Eingangsmatrix EM ist als Durchschaltematrix in PLA-Struktur ausgebildet. Jedem Eingangssignal E ist eine Zeile zugeordnet. Die Eingangssignale E können in der Zeile wirksam werden, wenn entsprechende durch Kreuze dargestellte Ankoppeltransistoren programmiert sind. Die Eingangssignale E1 bis E17 können über Inverter invertiert oder nichtinvertiert den Zeilen zugeführt werden.

Die Prioritätssignale P1 bis P5 geben fünf verschiedene Prioritätsstufen in einem 1-aus-5-Code an, d. h. es kann jeweils nur eines der Prioritätssignale P1 bis P5 den Wert 1 haben, und die jeweils anderen haben den Wert 0.

Die Rücksignale R1 bis R3 dienen einerseits zur Erzeugung der »internen Eingangssignale« E17 bis E24 oder zum Durchschalten der Eingangssignale E1 bis E17. Für jeden Wert der Rücksignale R1 bis R3 steht eine Spalte der Matrix zur Verfügung.

Falls beispielsweise an den in Fig. 2 durch Kreuze dargestellten Stellen Ankopplungstransistoren vorgesehen sind und die Eingangssignale E1 und E2 über die entsprechenden Brücken der Zeilten der Matrix zugeführt werden, wird im Adressenteil AD in der ersten Zeile ein Adressensignal erzeugt, wenn das Eingangssignal E1, das Rücksignal R1 und das Prioritätssignal P1 den Wert 1 haben. In entsprechender Weise wird in der zweiten Zeile ein Adressensignal erzeugt, wenn das Eingangssignal E2 den Wert 0 und das Prioritätssignal P2 den Wert 1 haben. Im Wortteil WO wird in beiden Prioritätsstufen ein Steuersignal S1 erzeugt, und in der zweiten Prioritätsstufe wird außerdem ein Steuersignal S6 erzeugt.

Von der Ablaufsteuerung AS ist in Fig. 3 der Prioritätsgenerator PG dargestellt. Die Funktion des Prioritätsgenerators PG entspricht der eines rückgekoppelten Schieberegisters, in dem der Wert 1 umläuft. Bei dem dargestellten Ausführungsbeispiel ist der Prioritätsgenerator PG durch eine programmierbare Matrix realisiert. Dem Prioritätsgenerator PG werden die gegenphasigen Taktimpulse T1 und T2 zugeführt. Durch ein Sperrsignal SP kann der Rhythmus des Prioritätsgenerators PG beeinflußt werden. Der dargestellte Prioritätsgenerator PG ist für eine Erzeugung von bis zu fünf Prioritätssignalen P1 bis P5 ausgelegt, die fünf Prioritätsstufen zugeordnet sind, wobei immer das Prioritätssignal mit der höchsten Nummer zuerst erzeugt wird.

Falls beispielsweise das Prioritätssignal P2 gerade erzeugt wird, werden mit dem nächsten Taktimpuls T1 die Ausgangssignale des Wortteils zum Adreßteil zurückgeführt, und die letzte Zeile im Adreßteil der Matrix erzeugt ein Adreßsignal. Dieses wird mit dem nächstfolgenden Taktimpuls T2 zum Wortteil durchgeschaltet, und das Prioritätssignal P1 wird erzeugt. Anschließend werden in ähnlicher Weise in einem neuen Zyklus wieder die Prioritätssignale P5 bis P1 erzeugt. Wenn das Sperrsignal SP den Wert 1 annimmt, wird der Prioritätsgenerator PG am Ende eines Zyklus gestoppt. Er verharrt dabei so lange in einer Wartestellung, bis das Sperrsignal SP wieder den Wert 0 annimmt. Das Sperrsignal SP wird beispielsweise dann verwendet, wenn mehrere programmierbare Schaltwerke zusammenarbeiten. In diesem Fall können durch das Sperrsignal SP der Reihe nach die Prioritätsgeneratoren PG in den einzelnen Schaltwerken freigegeben und gesperrt werden.

Weitere Einzelheiten des Steuerwerks werden im folgenden anhand eines Programmierungsbeispiels beschrieben.

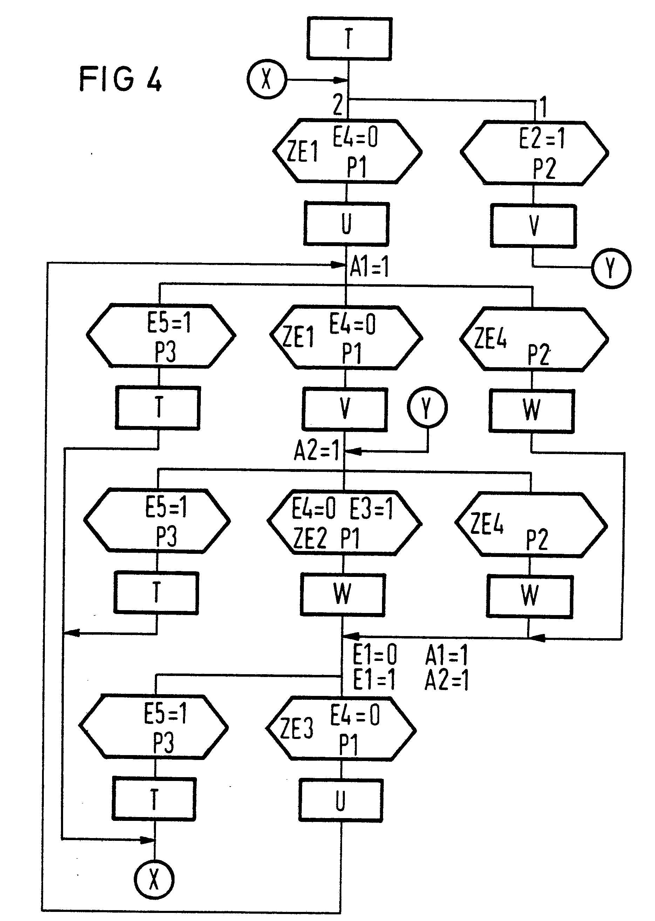

Bei dem in Fig. 4 dargestellten Betriebszustandsplan sind die einzelnen Schritte beim Ablauf mehrerer Funktionen dargestellt. In den rechteckigen Kästchen sind Betriebszustände T, U, V und W dargestellt. Eine Folge von Betriebszuständen besteht aus nummerierten Wegen mit einem Start-Betriebszustand, einer in einer Raute dargestellten Übergangsbedingung und einem Zielbetriebszustand. Eine Übergangsbedingung ist dann wirksam, wenn alle zugehörigen Kriterien, gegebenenfalls während der angegebenen Zeit, erfüllt sind. Einem Start-Betriebszustand sind meistens mehrere Ziel-Betriebszustände zugeordnet, deren Übergangsbedingungen sich in der Regel gegenseitig logisch nicht ausschließen. Daher können sie gleichzeitig erfüllt sein, und der weitere Ablauf entspricht nicht der gewünschten Funktion. In den herkömmlichen Flußdiagrammen tritt dieser Fall nicht auf, weil die Reihenfolge der Entscheidungsrauten zwangsläufig Prioritäten für die Wege ergibt. Daher ist eine Wegverzweigung stets eindeutig. Diese realisierungsbezogene Darstellungsform täuscht die Notwendigkeit einer zeitlich gestaffelten Verarbeitung vor. Dagegen treten im Betriebszustandsplan die logischen Entscheidungen einer Wegverzweigung in den Vordergrund. Ein eindeutiger Ablauf wird dadurch erreicht, daß die Übergangsbedingungen der Wege durch die Prioritätssignale P festgelegte Prioritätsstufen erhalten, die jedoch erst dann wirksam werden, wenn die logischen und zeitlichen Bedingungen gleichzeitig erfüllt sind. Im Betriebszustandsplan lassen sich auch simultane Abläufe darstellen, was einer Mehrfachverarbeitung entspricht.

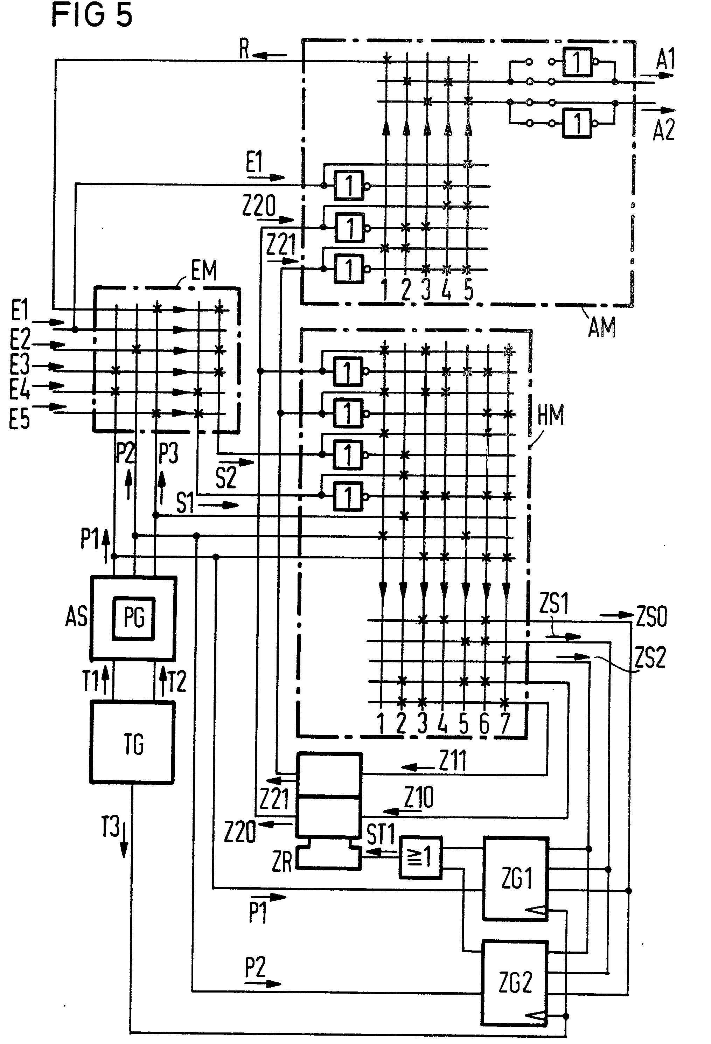

Bei dem in Fig. 5 für die Ausführung des Programmierungsbeispiels geeigneten Steuerwerk werden folgende Zuordnungen zwischen den Betriebszuständen und den Zustandssignalen Z1 und Z2, zwischen den Prioritätsstufen und den Prioritätssignalen P und zwischen den Zeiten ZE1 bis ZE4 und den Zeitsignalen ZS angenommen:

| Betriebszustände | | | | | |
|---|---|---|---|---|---|
| | Z11, Z21 | Z10, Z20 | | Z11, Z21 | Z10, Z20 |
| T | 1 | 1 | V | 0 | 0 |
| U | 1 | 0 | W | 0 | 1 |

| Prioritätsstufen | | | |
|---|---|---|---|
| | P3 | P2 | P1 |
| 1 | 0 | 0 | 1 |
| 2 | 0 | 1 | 0 |
| 3 | 1 | 0 | 0 |

# 0 012 171

| | Zeiten | | |
|---|---|---|---|
| | ZS2 | ZS1 | ZS0 |
| ZE1 | 0 | 0 | 1 |
| ZE2 | 0 | 1 | 1 |
| ZE3 | 1 | 0 | 0 |
| ZE4 | 0 | 1 | 0 |

Zunächst wird angenommen, daß der Betriebszustand T im Zustandsregister ZR gespeichert ist. Die Zustandssignale Z21 und Z20 haben damit den Wert 1. In der Ausgangsmatrix AM ist damit die Spalte 1 aktiviert, und es wird ein Rücksignal R erzeugt. In der Hauptmatrix HM sind die Spalten 1 bis 3 für eine Aktivierung vorbereitet. Wenn das Prioritätssignal P3 erzeugt wird, werden über die Eingangsmatrix EM das Eingangssignal E5 und das Rücksignal als Signale S1 bzw. S2 zur Hauptmatrix HM durchgeschaltet. Da nur das Prioritätssignal P3 den Wert 1 hat, kann nur die Spalte 2 der Hauptmatrix HM aktiviert werden. Da jedoch das Steuersignal S2 den Wert 1 hat, wird die Spalte 2 gesperrt. Am Ausgang der Hauptmatrix HM werden somit keine Signale abgegeben. Da keine Zeitanforderungen auftreten, wird auch kein Signal ST1 erzeugt, und der gespeicherte Betriebszustand T bleibt unverändert.

Wenn das Prioritätssignal P2 auftritt, wird im Betriebszustandsplan der Weg 1 beschritten. Das Eingangssignal E2 wird als Steuersignal S2 der Hauptmatrix HM zugeführt, und damit wird die Spalte 1 vorbereitet. Da das Prioritätssignal P2 in der Spalte 1 ebenfalls wirksam ist, gibt die Spalte 1 ein Adressensignal an den Wortteil der Hauptmatrix HM ab. Da diese Spalte im Wortteil mit keiner Zeile verbunden ist, haben die Zustandssignale Z11 und Z10 den Wert 0, der dem neuen Betriebszustand V entspricht. Außerdem haben die Zeitsignale ZS2 bis ZS0 die Werte 0, so daß keine Zeitanforderungen auftreten und durch das Signal ST1 sofort der Betriebszustand V in das Zustandsregister ZR eingespeichert wird. Das Signal ST1 wird im Zeitgeber ZG2 erzeugt, der durch das Prioritätssignal P2 freigegeben wird.

Wenn das Prioritätssignal P1 auftritt, kann im Betriebszustandsplan der Weg 2 beschritten werden. Falls das Eingangssignal E4 den Binärwert 0 hat, hat das Steuersignal S1 den Binärwert 0. Damit wird die Spalte 3 der Hauptmatrix HM vorbereitet. Da das Prioritätssignal P1 auch dieser Spalte zugeführt wird, wird ein Adressensignal erzeugt. Das im Wortteil erzeugte Zustandssignal Z11 hat den Wert 1, während das Zustandssignal Z10 den Wert 0 hat. Diese Werte sind dem neuen Betriebszustand U zugeordnet. Das Zeitsignal ZS0 hat den Wert 1, während die Zeitsignale ZS1 und ZS2 den Wert 0 haben. Diese Werte sind der Zeit ZE1 zugeordnet. Wenn die Zeit ZE1 abgelaufen ist, wird ein Signal ST1 erzeugt, das den Zustand U in das Zustandsregister ZR einspeichert.

Falls der zeitliche Ablauf der durchzuführenden Funktion mit dem Betriebszustand U fortgesetzt wird, haben die Zustandssignale Z21 und Z20 den Wert 1 bzw. 0. In der Ausgangsmatrix AM wird damit die Spalte 2 aktiviert, und ein Ausgangssignal A1 wird erzeugt. Die Ausgangssignale A1 und A2 können unter Verwendung jeweils eines Inverters wahlweise invertiert und nichtinvertiert abgegeben werden. In der Hauptmatrix HM sind die Spalten 2, 4 und 5 vorbereitet. Mit dem Auftreten des Prioritätssignals P3 werden wieder das Rücksignal R und das Eingangssignal E5 als Steuersignale S2 bzw. S1 durchgeschaltet. Da das Rücksignal R den Wert 0 hat, wird, falls das Eingangssignal E5 den Wert 1 hat, die Spalte 2 in der Hauptmatrix HM aktiviert. Die Zustandssignale Z11 und Z10 haben dann den Wert 1, der dem Betriebszustand T entspricht. Die Zeitsignale ZS2 bis ZS0 haben den Wert 0, so daß der neue Betriebszustand T sofort in das Zustandsregister ZR eingespeichert wird.

Mit dem Auftreten des Prioritätssignals P2 wird die Spalte 5 in der Hauptmatrix HM aktiviert. Die Zustandssignale Z11 bzw. Z10 nehmen die Werte 0 bzw. 1 an, die dem Betriebszustand W zugeordnet sind. Gleichzeitig nehmen die Zeitsignale ZS2, ZS1 und ZS0 die Werte 0 bzw. 1 bzw. 0 an, die der Zeit ZE4 zugeordnet sind. Nach Ablauf der Zeit ZE4 wird der neue Betriebszustand W in das Zustandsregister ZR eingespeichert.

Wenn das Prioritätssignal P1 auftritt, werden die Eingangssignale E3 bzw. E4 als Steuersignale S2 bzw. S1 durchgeschaltet. Während das Steuersignal S2 wirkungslos bleibt, aktiviert das Steuersignal S1, falls es den Wert 0 hat, die Spalte 4 in der Hauptmatrix HM. Die Zustandssignale Z11 und Z10 haben die Werte 0, die dem neuen Betriebszustand V zugeordnet sind. Die Zeitsignale ZS2, ZS1 und ZS0 haben die Werte 0 bzw. 1, die der Zeit ZE1 zugeordnet sind. Nach dem Ablauf der Zeit ZE1 wird der neue Betriebszustand V in das Zustandsregister ZR eingespeichert.

In ähnlicher Weise werden die weiteren im Betriebszustandsplan dargestellten Schritte ausgeführt. Hierbei ist noch insbesondere hervorzuheben, daß in dem Fall, daß vom Betriebszustand W ausgegangen wird, in der Ausgangsmatrix AM die Spalten 4 und 5 vorbereitet werden. Wenn das

6

Eingangssignal E1 den Binärwert 1 hat, gibt die Ausgangsmatrix AM das Ausgangssignal A2 ab. Wenn das Eingangssignal E1 den Binärwert 0 hat, gibt die Ausgangsmatrix AM das Ausgangssignal A1 ab. In diesem Fall erfolgt somit eine Verknüpfung eines Eingangssignals mit den Zustandssignalen in der Ausgangsmatrix AM.

**Patentansprüche**

1. Programmierbares Schaltwerk zum Steuern des zeitlichen Ablaufs von Funktionen in Geräten, an dessen Eingängen (17) eine Durchführung der Funktionen auslösende Eingangssignale (E) anliegen und das unter Verwendung eines mit mindestens einer programmierbaren Matrix versehenen Schaltnetzes (SN) und eines mit diesem verbundenen Zustandsregisters (ZR) zu durch mindestens einen Zeitgeber (ZG) festgelegten Zeitpunkten einzelnen Schritten der durchzuführenden Funktionen zugeordnete Ausgangssignale (A) abgibt, gekennzeichnet durch mindestens eine Eingangsmatrix (EM), die in Abhängigkeit von den Eingangssignalen (E) und in Abhängigkeit von unterschiedlichen Prioritätsstufen zugeordneten Prioritätssignalen (P) dem Schaltnetz (SN) zugeführte Steuersignale (S) erzeugt und durch eine mit einem Prioritätsgenerator (PG) versehene Ablaufsteuerung (AS), die die Prioritätssignale (P) erzeugt und an die Eingangsmatrix (EM) und an das Schaltnetz (SN) abgibt.

2. Programmierbares Schaltwerk nach Anspruch 1, dadurch gekennzeichnet, daß mindestens ein Teil der von dem Schaltnetz (SN) erzeugten Ausgangssignale (A) als Rücksignale (R) an der Eingangsmatrix (EM) anliegen.

3. Programmierbares Schaltwerk nach Anspruch 1 oder Anspruch 2, bei dem das Schaltnetz (SN) eine mit dem Zustandsregister (ZR) und den Zeitgebern (ZG1, ZG2) verbundene Hauptmatrix (HM) und eine mit dem Zustandsregister (ZR) und den Eingängen (17) des Schaltwerks verbundene, die Ausgangssignale (A) erzeugende Ausgangsmatrix (AM) enthält, dadurch gekennzeichnet, daß die Steuersignale (S) und die Prioritätssignale (P) an der Hauptmatrix (HM) anliegen.

4. Programmierbares Schaltwerk nach einem der Ansprüche 1 bis 3, dadurch gekennzeichnet, daß jedem der Zeitgeber (ZG1, ZG2) eines der Prioritätssignale (P1, P2) zugeführt wird.

5. Programmierbares Schaltwerk nach einem der Ansprüche 1 bis 4, dadurch gekennzeichnet, daß der Prioritätsgenerator (PG) eine programmierbare Matrix enthält, mit der die Anzahl der Prioritätsstufen und deren Reihenfolge festlegbar ist.

6. Programmierbares Schaltwerk nach einem der Ansprüche 1 bis 5, dadurch gekennzeichnet, daß der Prioritätsgenerator (PG) durch ein Sperrsignal (SP) beeinflußbar ist.

7. Programmierbares Schaltwerk nach einem der Ansprüche 1 bis 6, dadurch gekennzeichnet, daß die Eingangsmatrix (EM) als programmierbare Matrix ausgebildet ist.

8. Programmierbares Schaltwerk nach einem der Ansprüche 1 bis 7, dadurch gekennzeichnet, daß die Eingangsmatrix (EM) als Durchschaltematrix ausgebildet ist, mit der mindestens ein Teil der den Zeilen zugeführten Eingangssignale (E) in Abhängigkeit von den Prioritätssignalen (P) und/oder den Rücksignalen (R) als Steuersignale (S) durchschaltbar ist.

9. Programmierbares Schaltwerk nach einem der Ansprüche 1 bis 8, dadurch gekennzeichnet, daß mindestens einem Teil der Zeilen der Eingangsmatrix (EM), der Hauptmatrix (HM) und/oder der Ausgangsmatrix (AM) die Signale wahlweise invertiert oder nichtinvertiert zuführbar sind.

10. Programmierbares Schaltwerk nach einem der Ansprüche 2 bis 9, dadurch gekennzeichnet, daß die Rücksignale (R) zur Eingangsmatrix (EM) codiert übertragen werden und die Eingangsmatrix (EM) die Rücksignale (R) decodiert.

**Claims**

1. Programmable switching mechanism for controlling the time sequence of functions in devices, to whose inputs (17) are connected input signals (E) triggering performance of the functions, and which employing a switching network (SN) which is provided with at least one programmable matrix and a status register (ZR) which is connected to the switching network (SN), emits output signals (A), which are assigned to the individual steps of the functions to be performed, at times determined by at least one timer (ZG), characterised by at least one input matrix (EM) which in dependence upon the input signals (E) and in dependence upon priority signals (P) assigned to different priority stages, produces control signals (S) which are fed to the witching network (SN), and characterised by a sequence control unit (AS) which is provided with a priority generator (PG) and which produces the priority signals (P) and transmits them to the input matrix (EM) and to the switching network (SN).

2. Programmable switching mechanism as claimed in claim 1, characterised in that at least a portion of the output signals (A) produced by the switching network (SN) is connected to the input matrix (EM) as return signals (R).

3. Programmable switching mechanism as claimed in claim 1 or claim 2, wherein the switching network (SN) comprises a main matrix (HM), which is connected to the status register (ZR) and the timers (ZG1, ZG2), and an output matrix (AM), which is connected to the status register (ZR) and the inputs (17) of the switching mechanism and which produces the output signals (A), characterised in that the control signals (S) and the priority signals (P) are connected to the main matrix (HM).

4. Programmable switching mechanism as claimed in one of claims 1 to 3, characterised in that each timer (ZG1, ZG2) is fed with one of the priority signals (P1, P2).

5. Programmable switching mechanism as claimed in one of claims 1 to 4, characterised in that the priority generator (PG) contains a programmable matrix by means of which the number of the priority stages and their sequence is determinable.

6. Programmable switching mechanism as claimed in one of claims 1 to 5, characterised in that the priority generator (PG) can be controlled by a blocking signal (SP).

7. Programmable switching mechanism as claimed in one of claims 1 to 6, characterised in that the input matrix (EM) is designed as a programmable matrix.

8. Programmable switching mechanism as claimed in one of claims 1 to 7, characterised in that the input matrix (EM) is designed as a through-connection matrix, by means of which at least a portion of the input signals (E) which is fed to the rows can be connected through as control signals (S) in dependence upon the priority signals (P) and/or the return signals (R).

9. Programmable switching device as claimed in one of claims 1 to 8, characterised in that at least a section of the rows of the input matrix (EM), the main matrix (HM) and/or the output matrix (AM) can be fed with the signals alternatively in inverted or non-iverted fashion.

10. Programmable switching device as claimed in one of claims 2 to 9, characterised in that the return signals (R) are transmitted to the input matrix (EM) in coded fashion and the input matrix (EM) decodes the return signals (R).

## Revendications

1. Logique séquentielle programmable pour la commande du déroulement dans le temps de fonctions dans des appareils, aux entrées (17) de laquelle sont appliqués des signaux d'entrée (E) qui déclenchent l'exécution de fonctions, et qui, avec mise en oeuvre d'un réseau de commutation (SN) pourvu d'une matrice programmable et d'un registre d'états (ZR) relié audit réseau, émet à des instants déterminés par au moins une horloge (ZG) des signaux de sortie (A) associés à des pas individuels des fonctions à opérer, caractérisée par au moins une matrice d'entrée (EM) qui, en fonction des signaux d'entrée (E) et en fonction des signaux de priorité (P) associés à des étages de priorités différents, produit des signaux de commande (S) appliqués au réseau de commutation, et par une commande de déroulement (AS) qui est pourvue d'un générateur de priorités (PG) et qui produit les signaux de priorités (P) et les fournit à la matrice d'entrée (EM) et au réseau de commutation.

2. Logique séquentielle programmable selon la revendication 1, caractérisée par le fait qu'au moins une partie des signaux de sortie (A) qui sont produits par le réseau de commutation (SN), sont présents comme signaux de retour (R) au niveau de la matrice d'entrée (EM).

3. Logique séquentielle programmable selon la revendication 1 ou la revendication 2, dans laquelle le réseau de commutation (SN) comporte une matrice principale (HM) reliée au registre d'états (ZR) et aux horloges (ZG1, ZG2) et une matrice de sortie (AM) qui est reliée au registre d'états (ZR) et aux entrées (17) de la logique séquentielle, et qui produit les signaux de sortie (A), caractérisée par le fait que les signaux de commande (S) et les signaux de priorités (P) sont appliqués à la matrice principale (HM).

4. Logique séquentielle programmable selon l'une des revendications 1 à 3, caractérisée par le fait qu'à chaque horloge (ZG1, ZG2) est appliqué l'un des signaux de priorité (P1, P2).

5. Logique séquentielle programmable selon l'une des revendications 1 à 4, caractérisée par le fait que le générateur de priorités (PG) comporte une matrice programmable à l'aide de laquelle on peut déterminer le nombre d'étages de priorités et leurs séquences.

6. Logique séquentielle programmable selon l'une des revendications 1 à 5, caractérisée par le fait que le générateur de priorités (PG) est susceptible d'être influencé par un signal de blocage (SP).

7. Logique séquentielle programmable selon l'une des revendications 1 à 6, caractérisée par le fait que la matrice d'entrée (EM) est réalisée sous la forme d'une matrice programmable.

8. Logique séquentielle programmable selon l'une des revendications 1 à 7, caractérisée par le fait que la matrice d'entrée (EM) est réalisée sous la forme d'une matrice interconnectable à l'aide de laquelle au moins une partie des signaux d'entrée (E) qui sont appliqués aux lignes sont susceptibles d'être commutés sous la forme de signaux de commande (S), en fonction des signaux de priorités (P) et/ou des signaux de retour (R).

9. Logique séquentielle programmable selon l'une des revendications 1 à 8, caractérisée par le fait qu'à au moins une partie des lignes de la matrice d'entrée (EM), de la matrice principale (HM) et/ou de la matrice de sortie (AM), sont susceptibles d'être appliqués les signaux, au choix, avec inversion ou sans inversion.

10. Logique séquentielle programmable selon l'une des revendications 2 à 9, caractérisée par le fait que les signaux de retour à la matrice d'entrée (EM) sont transmis de façon codée, et la matrice d'entrée (EM) décode les signaux de retour (R).

FIG 1

0 012 171

FIG 2

AD | R1 | R3 | W0

E1

E2

E17

E18

E24

P5 | P2 | P1 | S1 | S6

FIG 3

SP

US

T2

T1

PG

T1

P5

P2

P1

T2

FIG 4

FIG 5

0 012 171